# EUROPEAN PATENT APPLICATION

(11) **EP 4 202 851 A1**
(43) Date of publication of application: **28.06.2023**
(21) Application number: 22202242.8
(22) Date of filing: 18.10.2022
(51) Int. Cl.: G06V 10/24, G06V 10/82, G06V 30/146

(54) **IMAGE FORMING APPARATUS, IMAGE FORMING METHOD, AND CARRIER MEDIUM**

(30) Priority: 22.12.2021 JP 2021208134
(71) Applicant: Ricoh Company, Ltd., Tokyo 143-8555 (JP)
(72) Inventor: ITOH, Shinya, Tokyo, 143-8555 (JP); SAKUYAMA, Hiroyuki, Tokyo, 143-8555 (JP)
(74) Representative: SSM Sandmair

(57) **Abstract**

An image forming apparatus (100) includes an image generation unit (511, 513) and an image recognition unit (52). The image generation unit (511, 513) generates a binary image having area gradation or a scaled image having area gradation from an image read by a scanner. The image recognition unit (52) outputs classification of the binary image or the scaled image according to a neural network model learned in advance.

## Description

### BACKGROUND

### Technical Field

Embodiments of the present disclosure relate to an image forming apparatus, an image forming method, and a carrier medium.

### Related Art

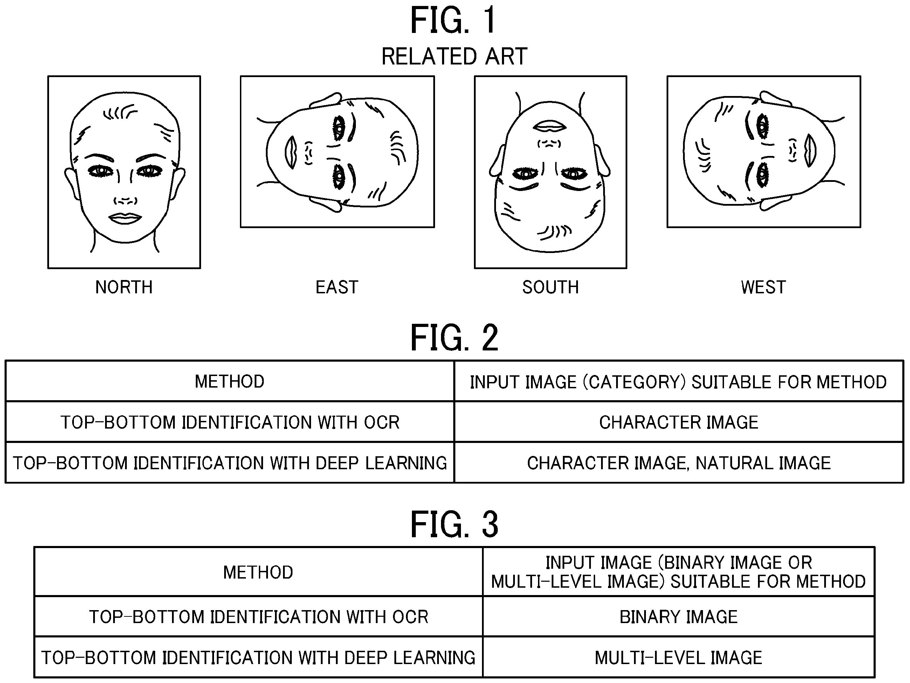

When a document is read by a scanner, the document may be read upside down or sideways. For example, referring to FIG. 1, a document to be read in "north" may be read in "south." In other words, the top and bottom of the document may be read oppositely, upside down. Alternatively, the document to be read in "north" may be read in "east" or "west." In other words, the document may be read sideways.

One approach to such a situation involves providing a technique of automatically determining the top and bottom of a document read in such a way as described above and correcting the orientation of the document so that the top and bottom of the document are in a correct orientation. In the following description, such a technique may be referred to as "top-bottom identification" (See Japanese Unexamined Patent Application Publication No. H05-217022). As a method in the related art, a method of performing the top-bottom identification with Optical Character Recognition (OCR) is known.

Although the method with the OCR is effective for a document including characters, the method with the OCR has some difficulties in coping with a document that includes few characters such as a photograph.

### SUMMARY

In light of the above-described problems, it is an object of the present invention to enhance the accuracy of image recognition.

In order to achieve the above-mentioned object, there is provided an image forming apparatus as described in appended claims. According to an embodiment of the present invention, the image forming apparatus includes an image generation unit and an image recognition unit. The image generation unit generates a binary image having area gradation or a scaled image having area gradation from an image read by a scanner. The image recognition unit outputs classification of the binary image or the scaled image according to a neural network model learned in advance.

Accordingly, the accuracy of image recognition is enhanced.

There is also provided an image forming method. According to an embodiment of the present invention, the method includes generating a binary image having area gradation or a scaled image having area gradation from an image read by a scanner and outputting classification of the binary image or the scaled image according to a neural network model learned in advance.

Accordingly, the accuracy of image recognition is enhanced.

There is also provided a carrier medium carrying computer readable code for controlling a computer system to carry out the method described above.

Accordingly, the accuracy of image recognition is enhanced.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram illustrating some scanning directions of a document;
FIG. 2 is a table of input images as categories suitable for some methods, according to an embodiment of the present disclosure;
FIG. 3 is a table of input images, including a binary image and a multi-level image, suitable for some methods, according to an embodiment of the present disclosure;
FIG. 4 is a view of an input image according to an embodiment of the present disclosure;
FIG. 5 is a view of a binary image that does not maintain gradation, according to an embodiment of the present disclosure;
FIG. 6 is a view of a binary image that maintains gradation, according to an embodiment of the present disclosure;
FIG. 7 is a view of a scaled (downsized) image that maintains gradation, according to an embodiment of the present disclosure.
FIG. 8 is a diagram illustrating a flow of a process according to an embodiment of the present disclosure;
FIG. 9 is a diagram illustrating a flow of a process according to an embodiment of the present disclosure;
FIG. 10 is a flowchart of a process according to an embodiment of the present disclosure;
FIG. 11 is a functional block diagram of an image forming apparatus according to an embodiment of the present disclosure;
FIG. 12 is a functional block diagram of an image processing unit according to an embodiment of the present disclosure;
FIG. 13 is a flowchart of image processing and top-bottom identification according to an embodiment of the present disclosure;
FIG. 14A is a diagram illustrating an input image according to an embodiment of the present disclosure;
FIG. 14B is a diagram illustrating a binary image that does not maintain gradation;
FIG. 14C is a diagram illustrating a binary image generated from the input image of FIG. 14A and maintains gradation;
FIG. 15A is a diagram illustrating an input image according to an embodiment of the present disclosure;
FIG. 15B is a diagram illustrating a binary image generated from the input image of FIG. 15A and maintains the gradation;
FIG. 15C is a diagram illustrating a scaled (downsized) image generated from the binary image of FIG. 15B and maintains the gradation; and
FIG. 16 is a diagram illustrating a hardware configuration of an image forming apparatus according to an embodiment of the present disclosure.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

For the sake of simplicity, like reference numerals are given to identical or corresponding constituent elements such as parts and materials having the same functions, and redundant descriptions thereof are omitted unless otherwise required.

Note that, in the following description, suffixes Y, M, C, and Bk denote colors of yellow, magenta, cyan, and black, respectively. To simplify the description, these suffixes are omitted unless necessary.

As used herein, the term "connected/coupled" includes both direct connections and connections in which there are one or more intermediate connecting elements.

A description is given of some embodiments for the top-bottom identification (i.e., automatically determining the top and bottom of a document and correcting the orientation of the document so that the top and bottom of the document are in a correct orientation). Note that the embodiments of the present disclosure may be applied to any identification and classification such as form identification and document type identification, in addition to the top-bottom identification.

Although a typical method of performing the top-bottom identification with the OCR is effective for a document including characters, the method with the OCR has some difficulties in coping with a document that includes few characters such as a photograph. To address such a situation, according to an embodiment of the present disclosure, a deep learning technique is used for the top-bottom identification.

The method of performing the top-bottom identification with the deep learning technique is superior to a document such as a photograph without characters because the OCR is not used.

FIG. 2 illustrates the relationship between the top-bottom identification with the OCR and the top-bottom identification with the deep learning technique with respect to categories.

Note that the deep learning technique may be referred to simply as the deep learning in the following description. As illustrated in FIG. 2, an image suitable for the top-bottom identification with the OCR is a character image (i.e., an image including characters), whereas images suitable for the top-bottom identification with the deep learning are a character image and a natural image (i.e., an image including no characters or an image including few characters).

The OCR is a method based on the premise that a binary image is used. On the other hand, a multi-level image is typically used for the deep-learning image recognition.

FIG. 3 illustrates the relationship between the top-bottom identification with the OCR and the top-bottom identification with the deep learning with respect to the binary image or the multi-level image.

As illustrated in FIG. 3, an image suitable for the top-bottom identification with the OCR is a binary image, whereas an image suitable for the top-bottom identification with the deep learning is a multi-level image.

However, since the memory consumption tends to increase when a multi-level image is used more than when a binary image is used, preparing the multi-level image may be difficult depending on the conditions of a device that carries a model learned by the deep learning.

As described above, although a multi-level image is preferable for the top-bottom identification with the deep learning, preparing the multi-level image is often difficult due to the limitations of a device. In other words, a binary image is preferably processed. However, in simple processing such as binarization or scaling such as downsizing or upsizing, using a model based on a convolutional neural network (CNN) easily loses features of an image in the process of calculation and may reduce the recognition rate.

The CNN typically repeats filtering and thinning. The filter outputs a multi-level image when a binary image is input. In other words, in the case of a deep neural network (DNN) with a filter such as the CNN, an input binary image is output as a multi-level image, which is subjected to the subsequent processing. In short, when an input image is a binary image, a multi-level image is obtained after filtering ideally as an original multi-level image input at the beginning.

In a case where a binary image is not directly input to the DNN but subjected to processing such as the scaling (downsizing or upsizing) before the image is input to the DNN, the multi-level image is obtained after filtering ideally as an original multi-level image input at the beginning.

According to the embodiments of the present disclosure, a binary image is processed so that the gradation remains (as much as possible) like a multi-level image to achieve a recognition rate equivalent to that of a multi-level image.

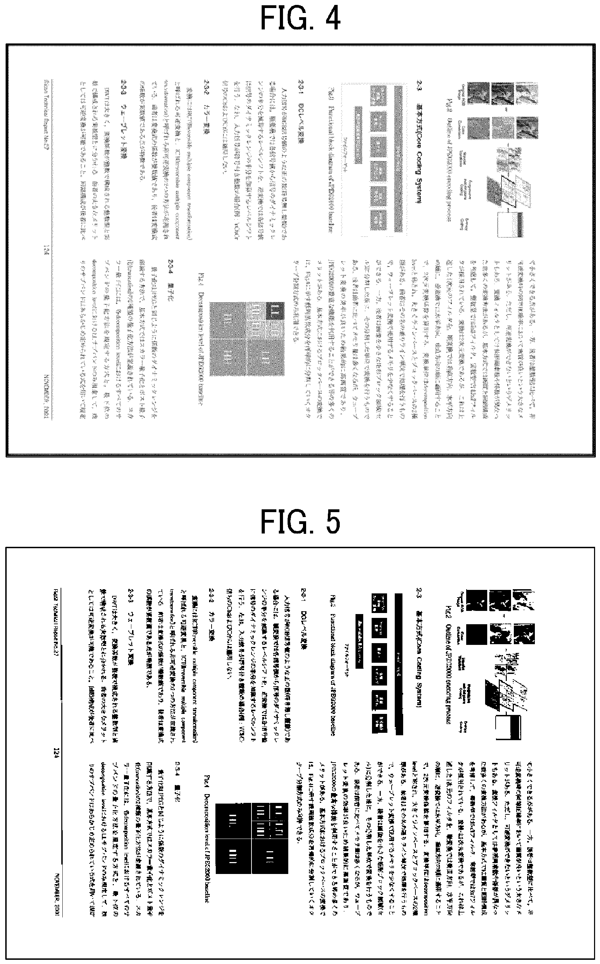

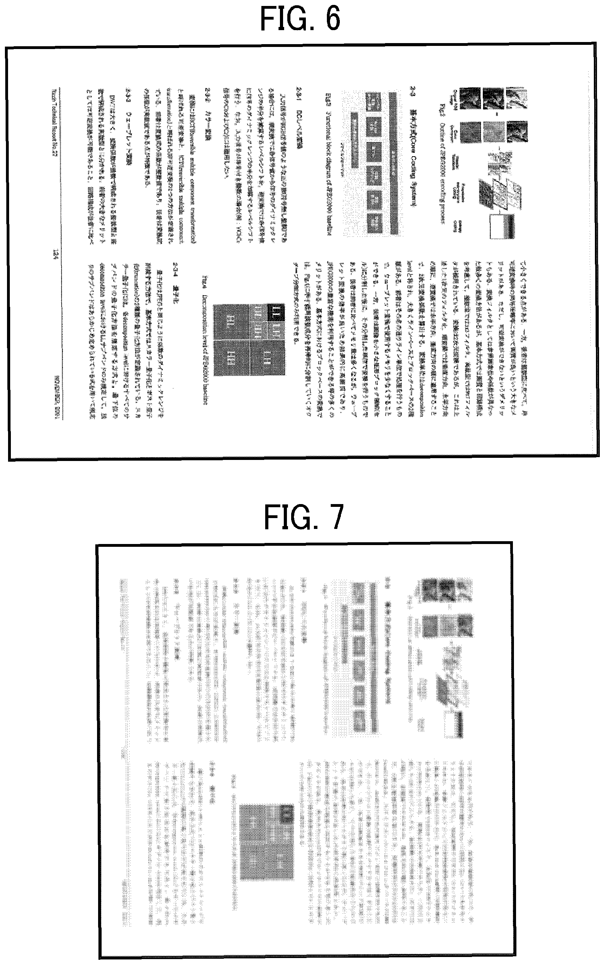

FIGS. 4 to 7 illustrate some examples of an image that maintains gradation, together with an image that is subjected to simple processing and does not maintain gradation. Specifically, FIG. 4 is a view of an input multi-level image according to an embodiment of the present disclosure. FIG. 5 is a view of a binary image that does not maintain gradation, according to an embodiment of the present disclosure. FIG. 6 is a view of a binary image that maintains gradation, according to an embodiment of the present disclosure. FIG. 7 is a view of a scaled (downsized) image that maintains gradation, according to an embodiment of the present disclosure.

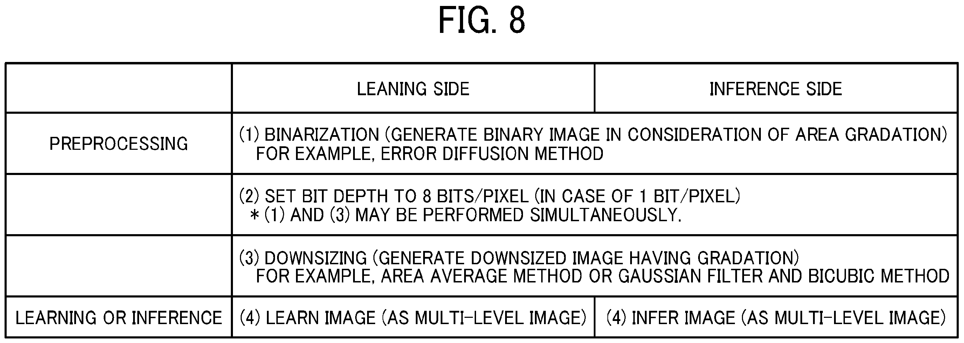

FIG. 8 is a diagram illustrating a flow of a process according to an embodiment of the present disclosure.

Initially, a description is given of a learning side with reference to FIG. 8.

As preprocessing, the binarization is performed in section (1). Specifically, a binary image is generated in consideration of area gradation by, for example, an error diffusion method. Note that the area gradation may be referred to as area coverage modulation. FIG. 8 illustrates the processing on the learning side together with the processing on an inference side. FIG. 8 illustrates a case where the same preprocessing is applied for learning and inference. In the embodiments of the present disclosure, any pre-learned model may be used for the input of grayscale images.

Subsequently, in section (2), the bit depth is set to 8 bits/pixel when the image has a bit depth of 1 bit/pixel. Note that sections (1) and (3) may be performed simultaneously.

Subsequently, in section (3), the downsizing is performed. Specifically, a downsized image having gradation is generated by, for example, an area average method or a Gaussian filter and bicubic method.

Subsequently, in section (4), the image is learned as a multi-level image.

With continued reference to FIG. 8, a description is given of the inference side.

As preprocessing, the binarization is performed in section (1). Specifically, a binary image is generated in consideration of the area gradation by, for example, the error diffusion method. FIG. 8 illustrates the processing on the learning side together with the processing on the inference side. FIG. 8 illustrates a case where the same preprocessing is applied for learning and inference. In the embodiments of the present disclosure, any pre-learned model may be used for the input of grayscale images.

Subsequently, in section (2), the bit depth is set to 8 bits/pixel when the image has a bit depth of 1 bit/pixel. Note that sections (1) and (3) may be performed simultaneously.

Subsequently, in section (3), the downsizing is performed. Specifically, a downsized image having gradation is generated by, for example, the area average method or the Gaussian filter and bicubic method.

Subsequently, in section (4), the image is inferred as a multi-level image.

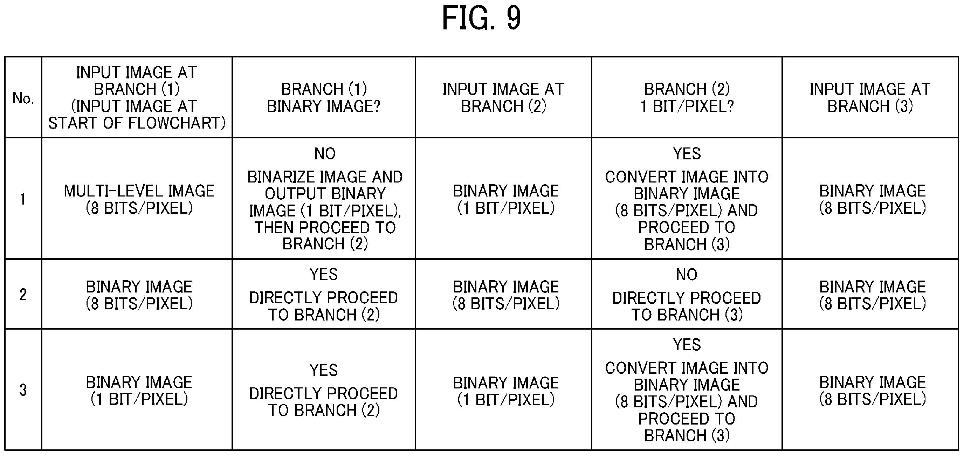

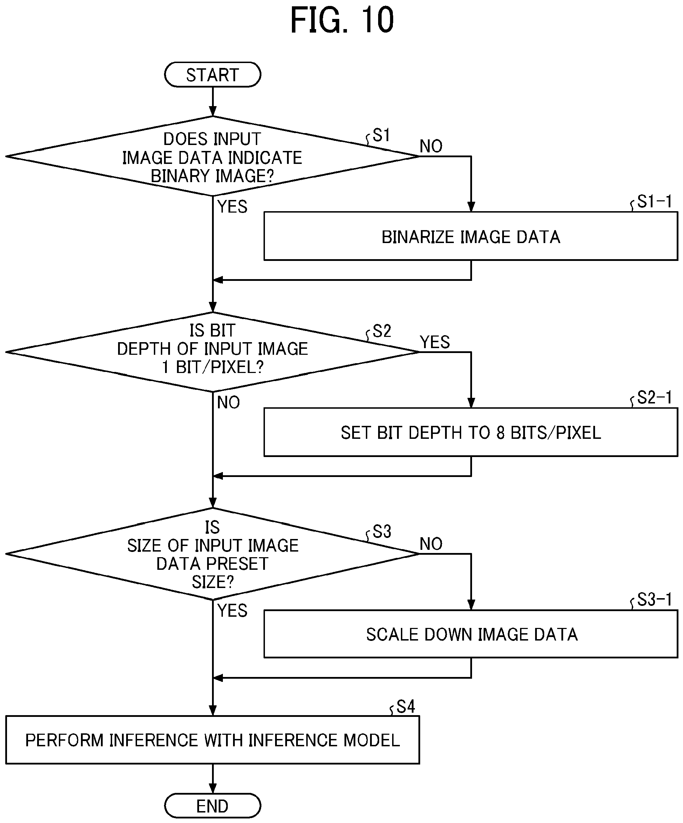

FIG. 9 is a diagram illustrating a flow of a process according to an embodiment of the present disclosure. FIG. 10 is a flowchart of a process according to an embodiment of the present disclosure.

Initially, a description is given of the image types with reference to FIGS. 9 and 10.

In the present description, a "binary image (8 bit/pixel)" is an image having each pixel value of two colors: black and white, and having a gradation in a plurality of colors.

Branch (1) in FIG. 9 corresponds to step S1 in FIG. 10 in which it is determined whether an input image data indicates a binary image. When the input image data indicates a binary image (YES in step S1 in FIG. 10), the process proceeds to step S2 in FIG. 10. By contrast, when the input image data does not indicate a binary image (NO in step S1 in FIG. 10), in step S1-1 in FIG. 10, the input image data is binarized.

Branch (2) in FIG. 9 corresponds to step S2 in FIG. 10 in which it is determined whether the bit depth of the input image is 1 bit/pixel. When the bit depth of the input image is 1 bit/pixel (YES in step S2 in FIG. 10), the process proceeds to step S3 in FIG. 10. By contrast, when the bit depth of the input image is not 1 bit/pixel (NO in step S2 in FIG. 10), in step S2-1 in FIG. 10, the bit depth of the input image is set to 8 bits/pixel.

Branch (3) in FIG. 9 corresponds to step S3 in FIG. 10 in which it is determined whether the size of the input image data is a preset size. When the size of the input image data is a preset size (YES in step S3 in FIG. 10), the process proceeds to step S4 in FIG. 10. By contrast, when the size of the input image data is not the preset size (NO in step S3 in FIG. 10), in step S3-1 in FIG. 10, the image data is scaled down. Thereafter, in step S4 in FIG. 10, the inference is performed with an inference model.

As illustrated in No. 1 of FIG. 9, in a case where the input image at branch (1) is a multi-level image (8 bits/pixel) such as a color image or a grayscale image, the multi-level image (8 bits/pixel) is binarized and a binary image (1 bit/pixel) resulting from the binarization of the multi-level image (8 bits/pixel) is output. Then, the process proceeds to branch (2). As the input image at branch (2) is the binary image (1 bit/pixel), the binary image (1 bit/pixel) is converted into a binary image (8 bits/pixel). Then, the process proceeds to branch (3).

As illustrated in No. 2 of FIG. 9, in a case where the input image at branch (1) is a binary image (8 bits/pixel), the process directly proceeds to branch (2). As the input image at branch (2) is the binary image (8 bits/pixel), the process directly proceeds to branch (3).

As illustrated in No. 3 of FIG. 9, in a case where the input image at branch (1) is a binary image (1 bit/pixel), the process directly proceeds to branch (2). As the input image at branch (2) is the binary image (1 bit/pixel), the binary image (1 bit/pixel) is converted into a binary image (8 bits/pixel). Then, the process proceeds to branch (3).

As described above, although a multi-level image is preferably prepared when the deep learning technique is adopted for the top-bottom identification, the accuracy of the top-bottom identification of a binary image according to the present embodiment is equivalent to the accuracy of the top-bottom identification of a multi-level image in an environment in which only the binary image can be prepared due to limitations of a device. The DNN having a filter used in the CNN as a component has a feature that an input binary image is output as a multi-level image, which is subjected to the subsequent processing. With this feature, the image is processed so that gradation remains (as much as possible) like a multi-level image in preprocessing such as the binarization and the scaling before the image is input to the DNN As a result, the image is input to the DNN as an original multi-level image, enhancing the recognition accuracy equivalent to that of a multi-level image.

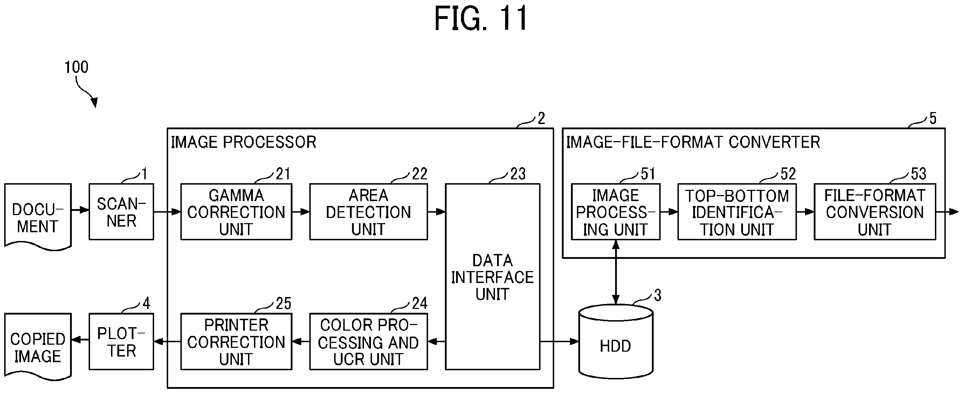

Referring now to FIG. 11, a description is given of a functional configuration of an image forming apparatus according to an embodiment of the present disclosure.

FIG. 11 is a functional block diagram of an image forming apparatus 100 as a digital color image forming apparatus according to an embodiment of the present disclosure.

The image forming apparatus 100 includes a scanner 1, an image processor 2, a hard disk drive (HDD) 3, a plotter 4, and an image-file-format converter 5. The image forming apparatus 100 functions as the scanner 1, the image processor 2, the HDD 3, the plotter 4, and the image-file-format converter 5 by executing programs.

The scanner 1 is a device that reads image data from a document. The scanner 1 transmits the read image data to the image processor 2.

The image processor 2 includes, for example, an area detection unit 22 and a color processing and under color removal (UCR) unit 24. The area detection unit 22 retains a character determination part and a color determination part. The character determination part determines whether a focused pixel or a pixel block of an image read by the scanner 1 is a character area or a non-character area (i.e., a pattern area). The color determination part determines whether a target color is a chromatic color or an achromatic color. Based on the determination, the color processing and UCR unit 24 performs color reproduction suitable for the document.

The plotter 4 is a transfer printing unit. The plotter 4 transfers the image data output from the image processor 2.

The image processor 2 includes a gamma correction unit 21, the area detection unit 22, a data interface unit 23, the color processing and UCR unit 24, and a printer correction unit 25. The image processor 2 executes processing for obtaining a copied image.

The gamma correction unit 21 performs one-dimensional conversion on signals to adjust the tone balance for each color of the data read by the scanner 1. The data read by the scanner 1 includes the analog-to-digital converted image data of 8 bits for each color of red (r), green (g), and blue (b). To simplify the description, in the present embodiment, a density linear signal (RGB signal with a signal value indicating white being 0) is obtained after the conversion. The output of the gamma correction unit 21 is transmitted to the area detection unit 22, where the output of the gamma correction unit 21 remains unchanged, and is further transmitted to the data interface unit 23.

The data interface unit 23 is an HDD-management interface that temporarily stores, in the HDD 3, the determination result from the area detection unit 22 and the image data processed by the gamma correction unit 21. On the other hand, the data interface unit 23 transmits, to the color processing and UCR unit 24, the image data processed by the gamma correction unit 21 and the determination result from the area detection unit 22.

The color processing and UCR unit 24 selects color processing or UCR processing based on the determination result for each pixel or pixel block.

The printer correction unit 25 receives cyan (c), magenta (m), yellow (y), and black (Bk) image signals from the color processing and UCR unit 24 and performs gamma correction and dithering in consideration of printer characteristics. Then, the printer correction unit 25 transmits the processed signals to the plotter 4.

The image-file-format converter 5 receives the image data processed by the gamma correction unit 21 and temporarily stored in the HDD 3 and performs the top-bottom identification. The image-file-format converter 5 uses the result obtained from the top-bottom identification to convert the image data into a file format of Office Open Extensible Markup Language (XML) Document adopted for portable document format (PDF) and Microsoft Word.

The image-file-format converter 5 includes an image processing unit 51, a top-bottom identification unit 52, and a file-format conversion unit 53. The image-file-format converter 5 executes processing to perform the top-bottom identification. Specifically, the image-file-format converter 5 performs the top-bottom identification and converts the file format based on the top-bottom identification result.

The image processing unit 51 applies, for example, the binarization and the scaling to the image data processed by the gamma correction unit 21. The image data converted by the processing of the image processing unit 51 is output to the top-bottom identification unit 52.

The top-bottom identification unit 52 serving as an image recognition unit inputs the image output from the image processing unit 51 to a recognition model learned in advance, to perform the top-bottom identification. In other words, the top-bottom identification unit 52 outputs classification of the image generated by the image processing unit 51, according to a neural network model learned in advance. An inference (or recognition) result as a top-bottom identification result is any one of north, east, west, and south. The top-bottom identification result obtained by the top-bottom identification unit 52 is output to the file-format conversion unit 53.

Now, a description is given of the recognition model. According to an embodiment of the present disclosure, the recognition model is a neural network model having a plurality of filters in layers. The recognition model is also a neural network model learned with a grayscale image as an input.

In the present embodiment, the correct labels are north, east, west, and south, thus indicating the orientations of an image. In other words, the top-bottom identification unit 52 outputs the orientation of the image generated by the image processing unit 51. However, the correct labels may be anything provided that the relationship between the orientation and the label is consistent. For example, the correct labels indicate indexes such as 0 to 3 provided that the relationship between the orientation and the label is consistent. In addition, the image and the correct label correlate. The relationship between the image and the correct label does not change depending on the subject.

The file-format conversion unit 53 uses the top-bottom identification result output from the top-bottom identification unit 52 to convert the image data into the file format of Office Open XML Document adopted for PDF and Microsoft Word.

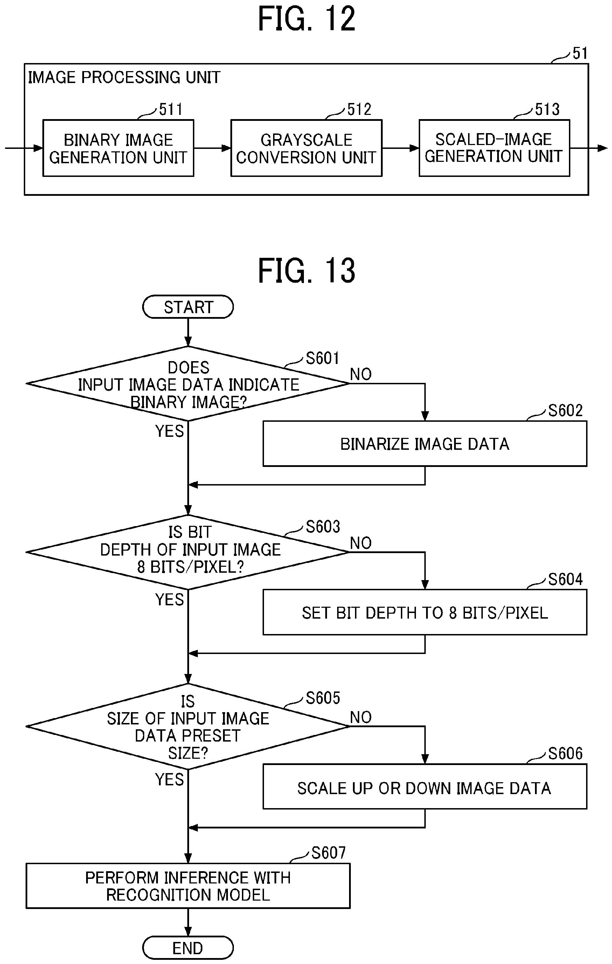

FIG. 12 is a functional block diagram of the image processing unit 51 according to an embodiment of the present disclosure.

The image processing unit 51 includes a binary image generation unit 511, a grayscale conversion unit 512, and a scaled-image generation unit 513.

The image processing unit 51 performs image processing (i.e., conversion) such as the binarization and the scaling on the image data input from the HDD 3. Then, the processed image data is input to the top-bottom identification unit 52.

Specifically, the binary image generation unit 511 binarizes the image input from the HDD 3, based on a binarization algorithm in consideration of the area gradation such as the error diffusion method. In a case where the image input from the HDD 3 is a multi-level image such as a color image or a grayscale image, a binary image generated by the binarization is output and input to the grayscale conversion unit 512. By contrast, in a case where the image input from the HDD 3 is a binary image, the binary image generation unit 511 outputs the input image to the grayscale conversion unit 512 without processing the input image. In other words, the image input from the HDD 3 remains unchanged and is input to the grayscale conversion unit 512.

The grayscale conversion unit 512 converts the binary image (1 bit/pixel) input from the binary image generation unit 511 into a binary image (8 bits/pixel) in a format suitable for the subsequent processing. The binary image (8 bits/pixel) resulting from the conversion performed by the grayscale conversion unit 512 is input to the scaled-image generation unit 513. In a case where the image input from the binary image generation unit 511 is already a binary image (8 bits/pixel), the image is input to the scaled-image generation unit 513 without being particularly subjected to conversion.

The scaled-image generation unit 513 scales the binary image input from the grayscale conversion unit 512 to an input size appropriate to the recognition model in a subsequent stage such as the recognition model for the top-bottom identification used in the top-bottom identification unit 52, based on a scaling algorithm in consideration of the area gradation such as the area average method or the Gaussian filter and bicubic method. Specifically, in a case where the binary image input from the grayscale conversion unit 512 has an image size greater than the input size appropriate to the recognition model in the subsequent stage, the scaled-image generation unit 513 scales down (i.e., downsizes) the binary image. By contrast, in a case where the binary image input from the grayscale conversion unit 512 has an image size smaller than the input size appropriate to the recognition model in the subsequent stage, the scaled-image generation unit 513 scales up (i.e., upsizes) the binary image. In short, the scale factor is uniquely determined by the image size of the input image. The binary image input from the grayscale conversion unit 512 and scaled to the input size appropriate to the recognition model in the subsequent stage is input to the top-bottom identification unit 52 as a scaled image. Note that, in a case where the binary image input from the grayscale conversion unit 512 has an image size equal to the input size appropriate to the recognition model in the subsequent stage, the scaled-image generation unit 513 does not scale the binary image. In other words, the binary image input from the grayscale conversion unit 512 remains unchanged and is input to the top-bottom identification unit 52.

Now, a description is given of a binarization method and a scaling method. As described above, the binary image generation unit 511 binarizes the image read by the scanner 1 with reference to peripheral pixels in the image to generate a binary image having the area gradation. On the other hand, the scaled-image generation unit 513 scales the image read by the scanner 1 with reference to the peripheral pixels in the image to generate a scaled image having the area gradation.

FIG. 13 is a flowchart of the image processing and the top-bottom identification according to an embodiment of the present disclosure.

The flow illustrated in FIG. 13 starts when the image-file-format converter 5 receives image data from the HDD 3.

In step S601, the binary image generation unit 511 determines whether the input image data indicates a binary image. When the input image data indicates a binary image (YES in step S601), the process proceeds to step S603. By contrast, when the input image data does not indicate a binary image (NO in step S601), the process proceeds to step S602. In other words, when the input image data indicates a multi-level image, the process proceeds to step S602.

In step S602, the binary image generation unit 511 generates a binary image. Specifically, based on the binarization algorithm in consideration of the area gradation, the binary image generation unit 511 binarizes the image data determined as indicating a multi-level image in step S601. When the operation performed in step S602 is completed, the process proceeds to step S603.

In step S603, the grayscale conversion unit 512 determines whether the image data determined as indicating a binary image in step S601 or binarized in step S602 indicates an image of 8 bits/pixel.

When the image data indicates an image of 8 bits/pixel (YES in step S603), the process proceeds to step S605. By contrast, when the image data does not indicate an image of 8 bits/pixel (NO in step S603), the process proceeds to step S604.

In step S604, the grayscale conversion unit 512 converts the bit depth of the image data indicating a binary image into 8 bits/pixel. In other words, the grayscale conversion unit 512 performs grayscale conversion from 0 to 0 and from 1 to 255. When the operation performed in step S604 is completed, the process proceeds to step S605.

In step S605, the scaled-image generation unit 513 determines whether the image size of the image data determined as indicating an image of 8 bits/pixel in step S603 or subjected to conversion in step S604 is a preset image size. When the image size is the preset image size (YES in step S605), the process proceeds to step S607. By contrast, when the image size is not the preset image size (NO in step S605), the process proceeds to step S606.

In step S606, the scaled-image generation unit 513 scales the image data to the preset image size, based on the scaling algorithm in consideration of the area gradation such as the area average method. Specifically, in a case where the image data has an image size greater than the preset image size, the scaled-image generation unit 513 scales down the image data. By contrast, in a case where the image data has an image size smaller than the preset image size, the scaled-image generation unit 513 scales up the image data. When the operation performed in step S606 is completed, the process proceeds to step S607.

In step S607, the top-bottom identification unit 52 inputs, to the recognition model learned in advance, the image data in the preset image size such as an image size to be input to the recognition model, to perform inference. In the present embodiment, the recognition model is a top-bottom identification model to output any one of north, east, west, and south for input image data.

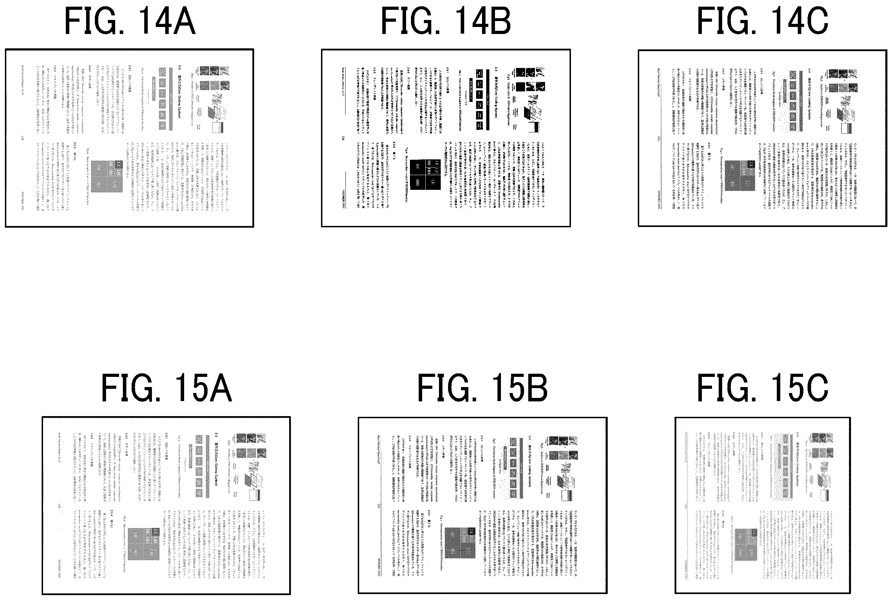

Referring now to FIGS. 14A to 14C, a description is given of the binarization of image data.

FIG. 14A is a diagram illustrating an input image according to an embodiment of the present disclosure. FIG. 14B is a diagram illustrating a binary image that does not maintain the gradation. FIG. 14C is a diagram illustrating a binary image generated from the input image of FIG. 14A and maintains the gradation.

The image data determined as not indicating a binary image in step S601 of FIG. 13 is binarized based on the binarization algorithm in consideration of the area gradation. The error diffusion method is a typical binarization algorithm in consideration of the area gradation.

For example, in a case where the image-file-format converter 5 processes an input multi-level image as illustrated in FIG. 14A, the binary image generation unit 511 of the image processing unit 51 generates a binary image that maintains the gradation as illustrated in FIG. 14C. For reference, FIG. 14B illustrates a binary image generated without consideration of the area gradation.

Referring now to FIGS. 15A to 15C, a description is given of the scaling of image data.

FIG. 15A is a diagram illustrating an input image according to an embodiment of the present disclosure. FIG. 15B is a diagram illustrating a binary image generated from the input image of FIG. 15A and maintains the gradation. FIG. 15C is a diagram illustrating a scaled (downsized) image generated from the binary image of FIG. 15B and maintains the gradation.

The image data determined as not having the preset image size in step S605 of FIG. 13 is scaled to the preset image size, based on the binarization algorithm in consideration of the area gradation. The area average method and the Gaussian filter and bicubic method are typical scaling algorithms in consideration of the area gradation.

For example, in a case where an input image is a multi-level image as illustrated in FIG. 15A, a binary image that maintains the gradation as illustrated in FIG. 15B is generated in steps S601 to S604 of FIG. 13. In step S606 of FIG. 13, a scaled image in the preset image size as illustrated in FIG. 15C is generated. Although FIG. 15C illustrates a downsized image, an upsized image may be generated in a case where the input image has an image size smaller than the preset image size. The scaled image thus generated is input to the top-bottom identification unit 52, which performs inference as the top-bottom identification.

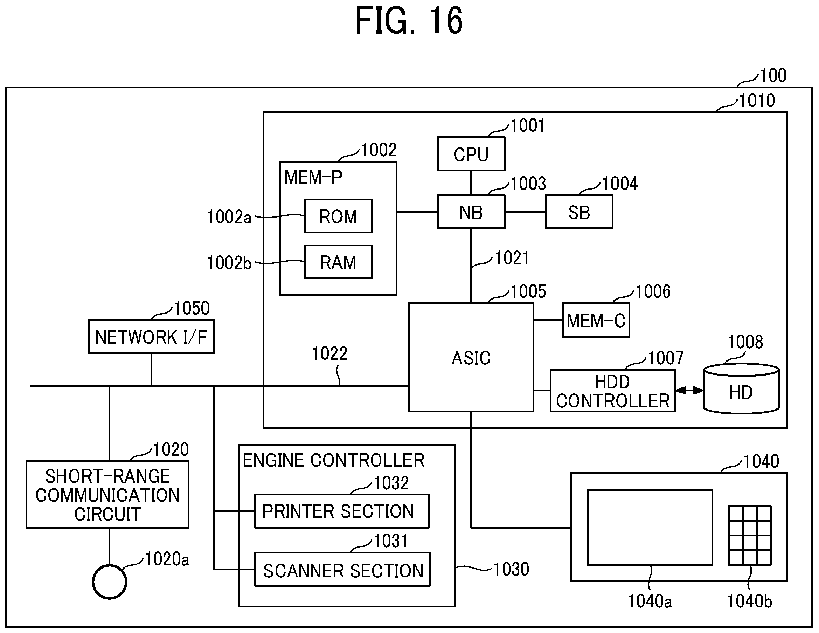

Referring now to FIG. 16, a description is given of a functional configuration of the image forming apparatus 100 according to an embodiment of the present disclosure.

FIG. 16 is a diagram illustrating the hardware configuration of the image forming apparatus 100 according to the present embodiment.

As illustrated in FIG. 16, the image forming apparatus 100 includes a controller 1010, a short-range communication circuit 1020, an engine controller 1030, a control panel 1040, and a network interface (I/F) 1050.

Specifically, the controller 1010 includes a central processing unit (CPU) 1001 as a main part of a computer, a system memory (MEM-P) 1002, a northbridge (NB) 1003, a southbridge (SB) 1004, an application-specific integrated circuit (ASIC) 1005, a local memory (MEM-C) 1006 as a storage device, a hard disk drive (HDD) controller 1007, and a hard disk or hard drive (HD) 1008 as a storage device. An accelerated graphics port (AGP) bus 1021 connects the NB 1003 and the ASIC 1005 to each other.

Specifically, the CPU 1001 controls the entire operation of the image forming apparatus 100. The NB 1003 connects the CPU 1001 to the MEM-P 1002, the SB 1004, and the AGP bus 1021. The NB 1003 includes a peripheral component interconnect (PCI) master, an AGP target, and a memory controller that controls reading and writing data from and to the MEM-P 1002.

The MEM-P 1002 includes a read only memory (ROM) 1002a and a random access memory (RAM) 1002b. The ROM 1002a stores data and programs for implementing various functions of the controller 1010. For example, the RAM 1002b is used to load the data and the programs. The RAM 1002b is also used as a memory for drawing data at the time of printing. For the purpose of distribution, the programs stored in the RAM 1002b may be stored in a computer-readable recording medium, such as a compact disc read-only memory (CD-ROM), a compact disc-recordable (CD-R), or a digital versatile disc (DVD), in a file format installable or executable by a computer.

The SB 1004 connects the NB 1003 to PCI devices and peripheral devices. The ASIC 1005 is an integrated circuit (IC) for image processing having hardware elements for image processing. The ASIC 1005 serves as a bridge to connect the AGP bus 1021, a PCI bus 1022, the HDD controller 1007, and the MEM-C 1006 to each other.

The ASIC 1005 includes a PCI target, an AGP master, an arbiter (ARB) serving as a core of the ASIC 1005, a memory controller that controls the MEM-C 1006, a plurality of direct memory access controllers (DMACs) that rotates image data with a hardware logic, and a PCI unit that exchanges data with a scanner section 1031 and a printer section 1032 via the PCI bus 1022. The ASIC 1005 may be connected to a universal serial bus (USB) interface or an Institute of Electrical and Electronics Engineers (IEEE) 1394 interface.

The MEM-C 1006 is a local memory that is used as a buffer for an image to be copied and a buffer for coding. The HD 1008 is a storage that accumulates image data, font data used at the time of printing, and form data. The HD 1008 controls reading or writing data from or to the HD 1008 under the control of the CPU 1001. The AGP bus 1021 is a bus interface for a graphics accelerator card, which has been proposed to accelerate graphics processing. The AGP bus 1021 directly accesses the MEM-P 1002 by high throughput to accelerate the graphics accelerator card.

The short-range communication circuit 1020 is provided with an antenna 1020a. The short-range communication circuit 1020 communicates in compliance with, for example, the near-field communication (NFC) or the BLUETOOTH.

The engine controller 1030 includes the scanner section 1031 and the printer section 1032. The control panel 1040 includes a panel display 1040a and an operation section 1040b. The panel display 1040a is, for example, a touch panel that displays current settings or a selection screen to receive a user input. The operation section 1040b includes, for example, a numeric keypad and a start key. The numeric keypad receives assigned values of image forming parameters such as an image density parameter. The start key receives an instruction to start copying. The controller 1010 controls the image forming apparatus 100 as a whole. For example, the controller 1010 controls drawing, communication, and inputs through the control panel 1040. The scanner section 1031 or the printer section 1032 performs image processing such as error diffusion, gamma conversion, or a combination thereof.

Note that a user may sequentially switch a document box function, a copier function, a printer function, and a facsimile function of the image forming apparatus 100 one to another with an application switch key on the control panel 1040 to select one of these functions of the image forming apparatus 100. When the document box function is selected, the image forming apparatus 100 enters a document box mode. When the copier function is selected, the image forming apparatus 100 enters a copier mode. When the printer function is selected, the image forming apparatus 100 enters a printer mode. When the facsimile mode is selected, the image forming apparatus 100 enters a facsimile mode.

The network I/F 1050 enables data communication through a communication network. The short-range communication circuit 1020 and the network I/F 1050 are electrically connected to the ASIC 1005 via the PCI bus 1022.

As described above, according to an embodiment of the present disclosure, the accuracy of the top-bottom identification of an input binary image is equivalent to that of an input multi-level image when the top-bottom identification method with the deep learning technique is adopted. Specifically, the accuracy of the top-bottom identification for a document such as a photograph is enhanced compared with a case where the typical top-bottom identification method with the OCR is adopted. In addition, the accuracy of the top-bottom identification of a binary image is equivalent to that of a multi-level image in an environment in which only the binary image can be prepared.

In other words, since the OCR is not used, the superiority to a document without characters such as a photograph is maintained. In addition, in an environment in which only a binary image can be prepared instead of a multi-level image, the accuracy of the top-bottom identification of the binary image equivalent to that of a multi-level image is achieved. Further, in a case where only a binary image can be prepared instead of a multi-level image or in a case where a binary image can be prepared, the recognition rate of the top-bottom identification of the binary image is enhanced.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An image forming apparatus (100) comprising:
an image generation unit (511, 513) configured to generate a binary image having area gradation or a scaled image having area gradation from an image read by a scanner; and
an image recognition unit (52) configured to output classification of the binary image or the scaled image according to a neural network model learned in advance.

2. The image forming apparatus (100) according to claim 1,
wherein the image generation unit (511, 513) is configured to binarize the image read by the scanner with reference to peripheral pixels in the image read by the scanner, to generate the binary image having the area gradation.

3. The image forming apparatus (100) according to claim 1,
wherein the image generation unit (511, 513) is configured to scale the image read by the scanner with reference to peripheral pixels in the image read by the scanner, to generate the scaled image having the area gradation.

4. The image forming apparatus (100) according to any one of claims 1 to 3, wherein the neural network model has a plurality of filters in layers.

5. The image forming apparatus (100) according to any one of claims 1 to 4, wherein the neural network model is learned with a grayscale image as an input.

6. The image forming apparatus (100) according to any one of claims 1 to 5, wherein the image recognition unit (52) is configured to output orientation of the binary image or the scaled image.

7. An image forming method, comprising:
generating (S602, S606) a binary image having area gradation or a scaled image having area gradation from an image read by a scanner; and
outputting (S607) classification of the binary image or the scaled image according to a neural network model learned in advance.

8. A carrier medium carrying computer readable code for controlling a computer system to carry out the method of claim 7.
